# EUROPEAN PATENT SPECIFICATION

(11) **EP 2 139 672 B1**
(45) Date of publication and mention of the grant of the patent: **09.07.2014**
(21) Application number: 08718819.9
(22) Date of filing: 19.03.2008
(51) Int. Cl.: B31B 1/04, B31B 1/74, B31B 1/88, G09B 21/00, B31F 1/07

(54) **ROTARY EMBOSSING**
ROTATIONSPRÄGEN
GAUFRAGE ROTATIF

(30) Priority: 19.03.2007 GB 0705260; 27.11.2007 GB 0723215
(43) Date of publication of application: 06.01.2010
(73) Proprietor: Chesapeake Limited, Phoenix Centre Nottingham Nottinghamshire NG8 6AW (GB)
(72) Inventor: ROBERTS, Michael, Quebec Durham DH7 9DQ (GB); YATES, David, Horsforth Leeds LS18 4PR (GB); DEGNAN, Andrew, Marlborough Wiltshire SN8 1JX (GB)
(74) Representative: Leckey, David Herbert
(86) International application number: PCT/GB2008/000982
(87) International publication number: WO 2008/114018

(56) References cited:
- EP-A- 1 844 926
- DE-U1-202005 017 869
- US-A- 5 816 994

## Description

The present invention relates to a method and apparatus for rotary embossing and in particular, but not exclusively, to a method and apparatus for embossing discrete sheet-like articles such as packaging blanks.

In recent times, it has become necessary to provide information for the visually impaired on certain types of packaging, most significantly on pharmaceutical packaging. This is usually achieved by embossing Braille characters onto the packaging. A number of machines are used for this purpose. In a first type of machine, the pattern is embossed into the packaging blank at the same time as the creases and cuts are formed in the blank. This is, however, rather slow and requires the use of multiple embossing units on a single machine. In another type of machine, the embossing takes place after the blank has been creased and cut. Such machines tend to use rotary embossing.

In a rotary embossing machine, male and complementary female formations are provided on opposed drums, between which the article to be embossed passes. The movement of the drums is synchronised, for example, by gearing, in order to ensure that the formations on the respective drums are in proper alignment. In the existing machinery, cut, creased and pre-folded blanks are fed to the embossing drums from a conveyor. The blanks are located accurately on the conveyor by flights. This ensures that the blanks are fed accurately to the embossing drums to ensure that the blanks are embossed in the correct position.

However, a drawback with the above type of machine is that the speed of delivery of blanks to the embossing drums is somewhat limited. For example, typical feed speeds are in the region of 120 metres per minute. Higher feed speeds are desirable. Accordingly, the present invention seeks to provide an alternative method of and apparatus for embossing a blank which overcomes or mitigates the above problems.

DE-20 2005 017 869 U1 discloses an embossing apparatus having the features of the preamble of claim 1. A printed pattern and embossed pattern registration control system is disclosed in US-A-3915090.

From a first aspect, therefore, the invention provides an embossing apparatus as set forth in claim 1.

The invention also extends to a method of embossing Braille set as set forth in claim 12.

Thus the present invention, rather than relying upon blanks being fed to an embossing drum in a well defined position, as is the case where blanks are supplied by a flighted conveyor, senses individual blanks as they are fed to the embossing drum and compensates for any change in spacing between adjacent blanks which, if not corrected for, would lead to the pattern to be embossed being positioned incorrectly on the blank. The invention allows blanks to be fed to the embossing drum on conventional conveyors, at much higher speeds, leading to improved productivity.

Preferably, co-operating male and female embossing drums are provided having complementary formations formed on each. In this event, the rotational position of both drums needs to be controlled such that the blank engages the embossing formation in the correct position.

The position of the blank can be sensed by any suitable means. Such means may sense any suitable datum on the blank. The datum on the blank can be any feature on the blank, provided the position of that feature relative to the position of the desired embossing is known. For convenience, the datum may be the leading edge of the blank. The sensing means may comprise any suitable sensor, such as an optical sensing unit.

The speed of the blank can most easily be sensed by determining the surface speed of the conveyor, as the blank moves with the surface of the conveyor without slipping. The surface speed of the conveyor can easily be determined from the rotational speed of a drive of the conveyor and the radial offset of the conveyor drive surface from the drive axis. An encoder may be provided on the drive shaft to provide information regarding the rotational speed of the drive.

Knowing the speed of the blank and the position of a datum, the time taken for the blank to reach the embossing formation can be accurately calculated. Knowing this, and the rotational position of the embossing formation on the drum and the speed of rotation of the drum it is possible to determine where on the blank, relative to the datum the formation will engage the blank.

The rotational position of the embossing formation does not need to be sensed as such, but can be determined by means such as an encoder which, once the initial position of the embossing formation is determined accurately, can be used to determine the formation's rotational position at later times.

If it is determined that the embossing formation will not engage the blank in the correct position, then a rotational position of the drum can be adjusted to compensate for this.

Advantageously, the adjustment is achieved using a servo motor drive for the drum, controlled by an appropriate servo control.

The speed of rotation of the embossing drum is adjusted so as to affect the necessary compensation. Thus, if it is determined that the embossing formation will engage the blank ahead of the intended position, the speed of the drum may be decreased such as to bring the formation and blank into the desired relative positions. Similarly, if it is determined that the formation will engage the blank behind the intended position, the drum speed can be increased.

In the preferred embodiment, both drums are driven by respective servo motors which are controlled independently by the control. In another arrangement, however, it would be possible to provide just a single servo motor which drives both drums through a suitable linkage. Two servo motors are preferred, however, as it reduces the inertial effects on the system.

The conveyor and embossing drum are preferably provided in a unit which can be fitted to existing machinery. In addition, the unit preferably further comprises an out feed conveyor which conveys the embossed blank to subsequent processing stations.

As is common in the conveying art, the infeed and outfeed conveyors may comprise a lower conveyor which receives a blank and an upper conveyor which is spring loaded against the lower conveyor so as to hold the blank firmly on the lower conveyor.

In one embodiment, the infeed and outfeed conveyors comprise a common lower conveyor, with separate upper conveyors arranged on the infeed and outfeed sides of the embossing unit. The lower conveyor is preferably driven by a single input, which may be taken from adjacent parts of the machinery. Alternatively, the conveyor may be driven by a separate motor whose speed is synchronised with the speed of adjacent machinery. The upper conveyor, at least on the infeed side may be adjustable in position longitudinally of the apparatus to accommodate different sizes of blanks so that they can be accurately fed to the nip between the embossing drums.

The above arrangement makes it possible for the blank not to be constrained by an upper conveyor in the region of the embossing drums. This is advantageous in that it permits the desired correction of drum position for a particular blank to occur while the preceding blank is still being embossed or is still held between the embossing drums. If the blanks were being held firmly between upper and lower conveyors while held between the drums, any relative movement between the drum surface and the conveyor (which runs at a constant speed) would lead to either compression or tension in the blank which could lead to buckling or tearing of the blank. The absence of upper restraint means that the blank can slip slightly on the lower conveyor to accommodate the relative movement. In the absence of such a feature, the system would have to configured only to effect a correction while no blank was between the embossing drums, which would mean leaving a larger gap between blanks. That would lead to slower blank through-put.

In preferred embodiments of the invention, therefore, the adjustment of the rotational position of the embossing formation occurs while a preceding blank is still between the embossing drums and the infeed and outfeed conveyors are positioned or configured such as to permit relative movement between the blanks and the lower conveyor as the blanks pass between the drums,

In an alternative embodiment to that described above with separate infeed and outfeed upper conveyors, common upper and lower infeed and outfeed conveyors may be provided. However, to allow for slippage of the blank relative to the lower conveyor, in a preferred arrangement, the biasing force exerted by the upper infeed conveyor section and possibly also the outfeed conveyor section against the corresponding lower conveyor sections is adjustable. This permits the spring force forcing the blank down onto the lower conveyor to be reduced or eliminated in the region of the embossing drums, thereby permitting slippage of the blank on the lower conveyor.

This arrangement may be advantageous over the arrangement described earlier where there is no upper conveyor in the region of the embossing drums. Since although there is no significant clamping between the upper and lower conveyors, the upper conveyor does prevent the blank lifting, as might otherwise happen, particularly towards the edges of the blank.

Typically the upper conveyor biasing arrangement comprises a plurality of spring loaded wheels acting against the back of the upper conveyor, and the adjustment can be effected by merely raising the wheels away from the conveyor, for example using a suitable cam mechanism.

Preferably, more than one conveyor is provided across the width of the unit to provide sufficient support for the blank. Most preferably the conveyors are adjustable laterally so as to provide support in the appropriate position.

The embossing drums are also preferably adjustable laterally of the apparatus. This allows the position of the drum to be adjusted to lay down the embossed pattern in a desired position on the blank.

For example, a typical packaging blank comprises a number of panels hingedly connected together about crease lines. The invention will allow particular panels to be embossed as required. For example, face panels of the blank may be embossed. It is possible also to emboss say a glue panel in order to treat the surface thereof. This may potentially improve the adhesion of that panel to an adjacent panel.

In one embodiment, embossing drum supports may be mounted on shafts extending laterally between the sides of the apparatus. The drive motor may be fixed to a side of the apparatus and have a drive shaft extending laterally across the apparatus such that irrespective of the lateral position of the drum it will be able to engage the drive shaft.

In one embodiment, where respective drive motors are provided for the respective embossing rollers, the drive motors may be arranged on opposite sides of the apparatus in order to facilitate motor positioning.

Alternatively, and preferably, each drum and its associated drive motor is mounted on a carriage which is adjustable in transversely of the apparatus on guides extending across the apparatus. Such an arrangement has the potential advantage that the drum and motor may be assembled onto the carriage away from the apparatus, thereby facilitating setting.

It will be appreciated that more than one size of embossing drum may have to be used on a machine at different times, depending, for example, on the size of blank being embossed. Preferably therefore, means are provided to accommodate different drum sizes.

In one preferred arrangement, therefore, the upper and lower embossing drums are mounted in vertically adjustable supports, preferably slidingly mounted in the apparatus.

In one embodiment the respective support is engageable with an adjustable stop provided on the machine. Preferably the stop is formed as an adjustable wedge, such that depending on the position of the wedge, the support will engage with the stop at a higher or lower position. Of course, in an alternative embodiment, the wedge could instead be provided on the support and a static stop be provided on the machine

The wedge may be mounted on the machine frame in any suitable manner, for example, in a sliding mount, or in a number of discrete positions.

The wedge is preferably a stepped wedge which may be preferably in that each step may correspond to a particularly drum diameter thereby facilitating setting.

The above arrangements are advantageous in their own right, so from a further aspect, the invention provides an embossing apparatus comprising a pair of supports for opposed embossing drums, said supports cooperating with the machine through being an adjustment wedge for adjusting the relative vertical positions of the supports.

Preferably a pair of spaced apart adjustment wedges is provides for each drum support.

The above described arrangement may potentially provide very accurate positioning of the drums. However, it will be appreciated that in use, some degree of fine adjustment may be needed to accommodate, for example the thickness of the blank material, wear in component parts etc. To accommodate this, at least one drum (and preferably only one) support preferably engages the aforementioned wedge through a further, fine adjustment wedge. This arrangement of wedge engaging wedge provides for a wide range of accurate adjustment.

The fine adjustment wedge may be moved by any suitable means such as a lead screw.

The embossing drum preferably comprises a drum body which receives an embossing plate around a peripheral surface thereof.

The embossing plate may extend around the entire periphery of the drum or only a part thereof. A plurality of discrete plates may be mounted in desired circumferential positions on the drum.

In the preferred embodiment, the embossing plate preferably comprises a chamfer extending along at least one longitudinal edge for engagement with a complementary formation on the drum. Preferably chamfers are provided on both longitudinal edges of the plate.

In a preferred embodiment, the drum comprises a clamping disk which engages one face of the disk and engages over a chamfered edge of the embossing plate.

The chamfer may be machined on to the plate during manufacture by any suitable process, for example by milling. In order to facilitate the manufacture, the plate may be attached to a support, with the machining extending into the support. The support may then be discarded. In a simple embodiment, the support may be a plastic plate or sheet and the plate may be secured to it in any convenient manner, for example by adhesive tape.

The embossing drum may comprise any suitable number of embossing formations. For example, depending on the size of the blank being embossed, the drum may contain two, three or even more embossing patterns so that more than one blank is embossed per revolution of the embossing drum.

It is also possible within the scope of the invention to provide a plurality of pairs of embossing drums in the unit to allow different regions of the blank to be embossed simultaneously. Thus, for example, more than one panel of a packaging blank may be embossed. In such arrangements, the drum pairs are preferably spaced laterally across the unit and are preferably arranged on a common drive spindles driven by the same motor or motors. Provided the drum pairs are correctly positioned one relative to the other when the machine is set up, they will maintain their proper relative rotational position such that the patterns embossed in the different positions maintain the correct relative positions.

From a further aspect therefore, the invention provides a rotary embossing machine comprising a plurality of rotary embossing drums arranged on a common drive spindle.

A preferred embodiment of the invention will now be described by way of example only with reference to the accompanying drawings in which:
Figure 1 shows a side view of an apparatus in accordance with the invention;
Figure 2 shows a similar view to Figure 1 but with various components removed for clarity;
Figure 3 shows an end view of the apparatus of Figure 1;
Figure 4 shows a top plan view of the apparatus of Figure 1;
Figure 5 shows schematically a control for the apparatus;
Figure 6 shows an embossing drum for use in the apparatus of Figure 1;
Figure 7 shows an embossing plate for use in the embossing drum of Figure 6;
Figure 8 shows a perspective view of a second apparatus in accordance with the invention;
Figure 9 shows a front view of the apparatus of Figure 8;
Figure 10 shows a side view of the apparatus of Figure 8;
Figure 11 shows the apparatus of Figure 8 from a different perspective and having additional components;
Figure 12 shows a subassembly of the apparatus of Figure 8;
Figure 13 shows a further subassembly of the apparatus of Figure 8;
Figure 14 shows a yet further subassembly of the apparatus of Figure 8;
Figure 15 shows the conveyor belt arrangement of the apparatus of Figure 8;
Figure 16 shows an exploded detail of Figure 15;
Figure 17 shows an exploded view of an alternative coupling between an embossing drum and servo motor; and
Figure 18 shows the coupling of Figure 17 assembled.

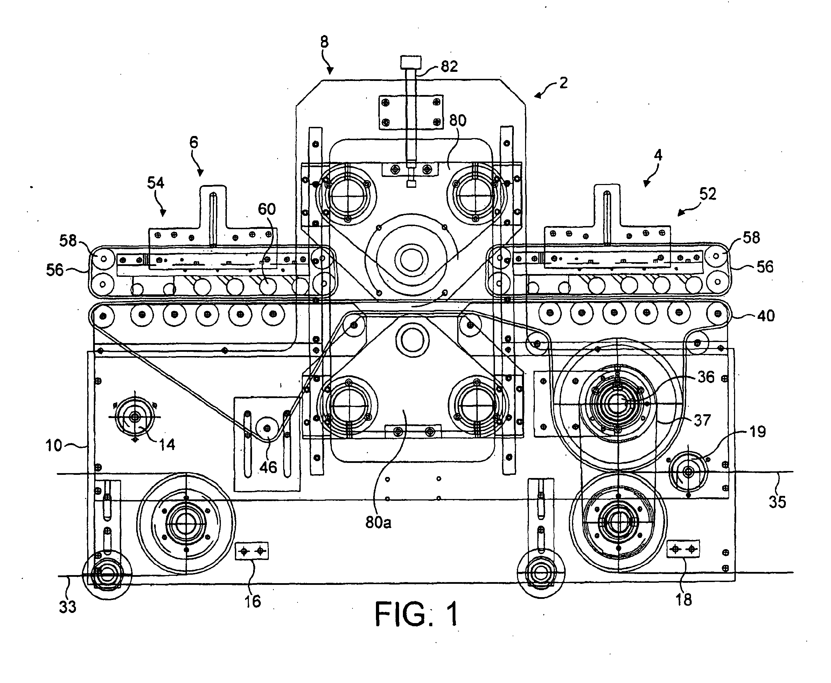

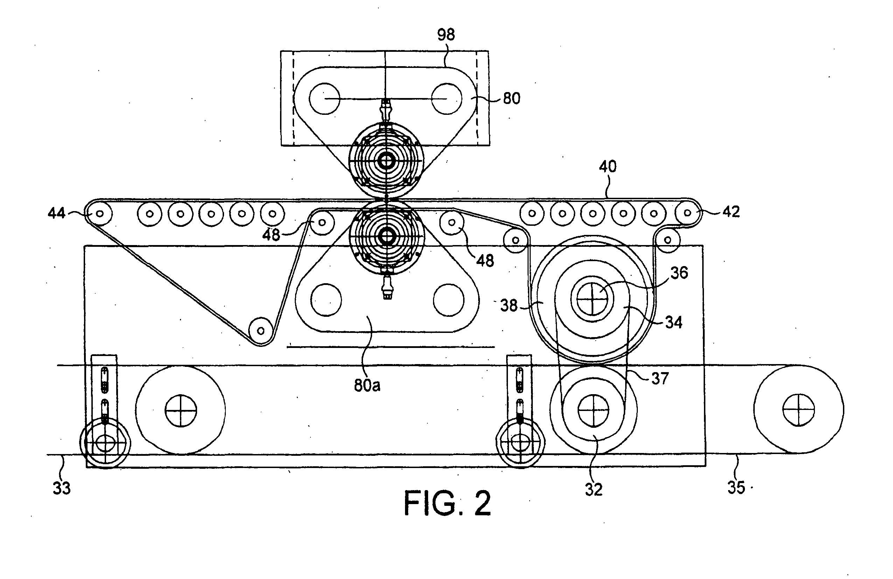

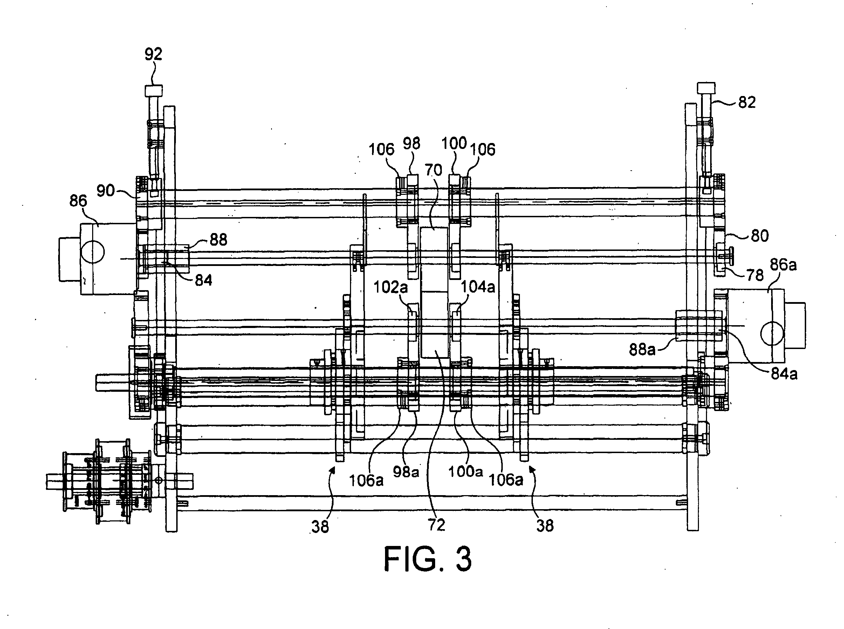

Referring to Figures 1 to 4, a rotary embossing apparatus 2 comprises, in broad terms, an infeed conveyor 4, an outfeed conveyor 6 and a rotary embossing unit 8 arranged between the infeed and outfeed conveyors 4, 6.

The unit 2 is arranged between upstream and downstream units not shown. The upstream unit typically will comprise a prefolding unit which takes cut and creased blanks from a magazine and prefolds them to facilitate subsequent gluing. The downstream unit is typically a folding and gluing unit.

Returning to the unit 2, in more detail, the unit 2 comprises side plates 10,12 which are joined by cross-braces 14,16. Mounted to one side plate 10 are first and second spindles 20,22. On the first spindle 20 are mounted a first pulley 24 and second pulley 26. On the second spindle 22 are mounted first, second and third pulleys 28,30,32. The first pulley 24 mounted on first spindle 20 receives drive from an adjacent downstream unit (not shown) through a belt 33 . The drive is transferred across the unit through the smaller diameter pulleys 26,28. The larger diameter pulley 30 on the second spindle 22 rotates with the smaller diameter pulley 28 and provides drive through a belt 35 to an upstream unit (not shown).

The innermost pulley 32 on spindle 22 is used to drive the infeed and outfeed conveyors 4,6. In particular, the pulley is connected by a belt 37 to a further pulley 34, mounted on a spindle 36 which extends between the side plates 10, 12. Mounted on the spindle 36 are two belt drive assemblies including a drive belt pulley 38, although more such pulleys may be provided if required. A conveyor belt 40 extends around the drive pulley 38, around respective sets of rollers 42,44 arranged on the infeed and outfeed sides of the unit, around a tensioning roller 46 and guide rollers 48. The position of the drive pulleys 38 on the spindle 36 may be adjusted by loosening adjustment bolts 50. It will thus be seen that a single belt 40 forms part of both the infeed and outfeed conveyors 4,6.

Arranged above the respective drive belts 40 are upper and lower belt units 52,54. These units each comprise a belt 56 which travels around four guide rollers 58 and which is spring loaded against the drive belt 40 by spring rollers 60 provided in each unit. The upper units 52,54 are not driven other than by friction with the lower drive belt or blanks thereon. The upper belt units 52,54 are also mounted to the unit in such a manner that they may be moved both laterally in the unit and also longitudinally so that they may move closer together or further apart.

The embossing unit 8 comprises a male drum 70 and a female drum 72. The male drum 70 is mounted onto a shaft 74 for rotation therewith. The female drum 72 is mounted onto a shaft 76 for rotation therewith. At one end the shaft 74 is supported by a bearing 78 in an end plate 80 which is moveable vertically relative to the side plate 12 by means of a turn screw arrangement 82. The other end of the shaft is coupled to the output shaft 84 of a servo motor 86 by means of a coupling sleeve 88. The servo motor 86 is mounted to a further end plate 90 which is also mounted moveably with respect to the side plate 10 by virtue of a turn screw arrangement 92.

Two shafts 94,96 extend between the side plates 80,90. These shafts 94,96 serve to mount upper drum supports 98,100. As can be seen in Figure 1, the drum supports 98, 100 are generally triangular in shape. The upper drum 70 is located in the drum supports 98,100 by respective bearings 102,104. This mounting arrangement stabilises the position of the drum and counteracts any forces which may act on the drive shaft 74.

The lower, female drum 72 is mounted in a similar manner. At one end the shaft 76 is supported by a bearing 78a in an end plate 80a. The other end of the shaft 76 is coupled to the output shaft 84a of a servo motor 86a by means of a coupling sleeve 88a. The servo motor 86a is mounted to a further end plate 90a. The lower drum 72 may be mounted vertically adjustable in the apparatus by virtue of turn screw arrangements not shown.

Two shafts 94a , 96a extend between the side plates 80a, 90a. These shafts 94a, 96a serve to mount the lower drum supports 98a, 100a. As can be seen in Figure 1, the drum supports 98a, 100a are generally triangular in shape. The lower drum 72 is located in the drum supports 98a ,100a by respective bearings 102a, 104a. This mounting arrangement stabilises the position of the drum and counteracts any forces which may act on the drive shaft 76.

It will be noted that the servo motor 86 which drives the male drum 70 and the servo motor 86a which drives the female drum 72 are arranged at opposite sides of the apparatus in order to facilitate their mounting on the apparatus..

The drum supports 98, 100, 98a, 100a, can be moved along the shafts 94, 96, 94a, 96a to a desired position by loosening hydraulic clamping fasteners 106, 106a provided on each support.

An optical sensor 108 is mounted to the unit in a position shown schematically in the Figures at upstream of the embossing drums 70, 72. These sensors detect the leading edge of blank 110 as it passes between them and feed this information to a servo control 112 for the apparatus as will be described further below.

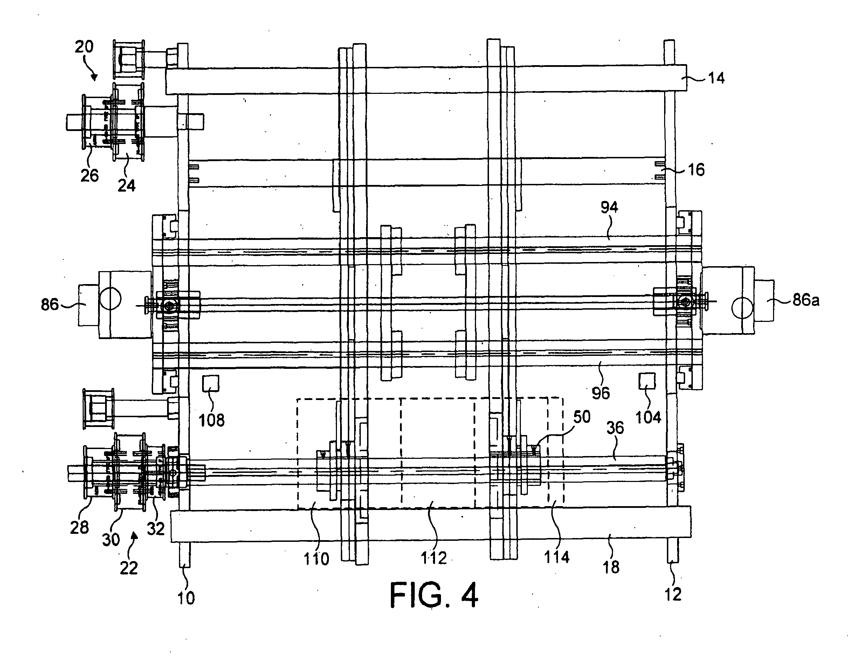

The control ensures that the blank 108 engages with the drums 70,72 so that the embossed pattern on the blank is in the correct position. This control is illustrated schematically in Figure 4.

The servo control 110 comprises a controller 120 which receives an input signal 122 from the optical sensor 108 when the leading edge 110 of the blank 106 is detected. The controller 120 also receives a second input 124 from an encoder 126 which is mounted on the spindle 36 of the lower elevator belt 40. The input 124 is representative of the rotary speed of the spindle 36. From the signal 124, and knowing the diameter of the belt drive pulley 50, the controller 120 can calculate the speed of the conveyor belt 40 and therefore the speed of the blank 110 which is travelling on the belt 40.

The controller 120 further receives a third input 128 from the servo motor 86, e.g. from an encoder associated with a shaft of the motor 86. The third input is representative of the rotational position of the drum and thus the embossing formation at the time the leading edge of the blank 110 is detected by the sensor 108. With this information and knowing the speed of the servo motor 86, which is derived from a further input 130 (or from the input 128), the controller 120 can calculate how long it will take for the blank 110 to engage with the embossing formation and whether this engagement will take place at the desired position. If the controller 120 calculates that it will not, then it sends an output signal 132 to the servo motor either increasing or decreasing the speed of the servo motor such that the embossing formation will engage the blank in the correct position.

As there is no upper conveyor belt in the region of the drums 70, 72, the correction can take place even when the preceding blank is still between the embossing drums 70, 72, the blank being able to slip slightly relative to the lower conveyor belt 40. In fact, for the reasons explained in the introduction to this application it is preferred that the correction does take place while the preceding blank is still between the embossing drums 70, 72.

It will be understood that when the apparatus is first operated it will be necessary to register the correct position of the drum relative to the blank which can then be taken as a starting point for subsequent determination of the rotational position of the drum.

Whilst Figure 4 shows just a single servo motor being controlled in this manner, in the preferred embodiment both servo motors are controlled in this manner.

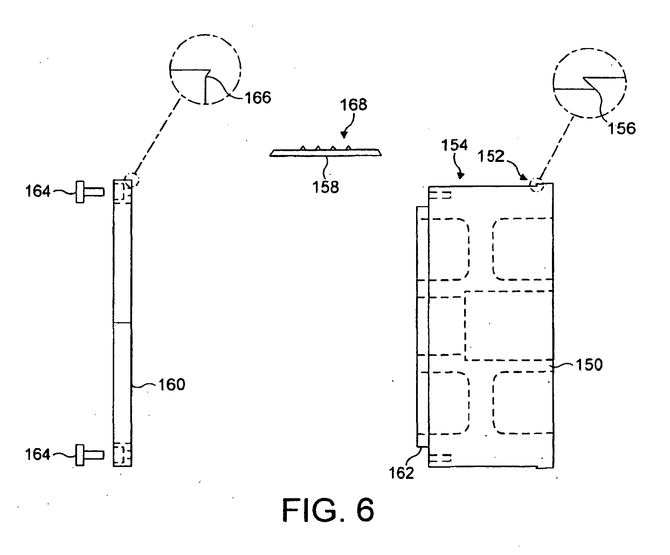

Turning now to Figure 6, a drum 70 is shown in an exploded view. The drum 70 comprises a drum body 150 having a groove 152 formed in its peripheral surface 154. The inner edge 156 of the groove is angled outwardly as shown in the detail A. The groove 152 receives an embossing plate 158 which is secured in position by a clamping collar 160 which locates over a shoulder 162 formed on the drum body 150. Six equispaced bolts 164 secure the clamping collar 160 to the drum body 150. The upper edge 166 of the clamping plate 160 is chamfered as shown detail B.

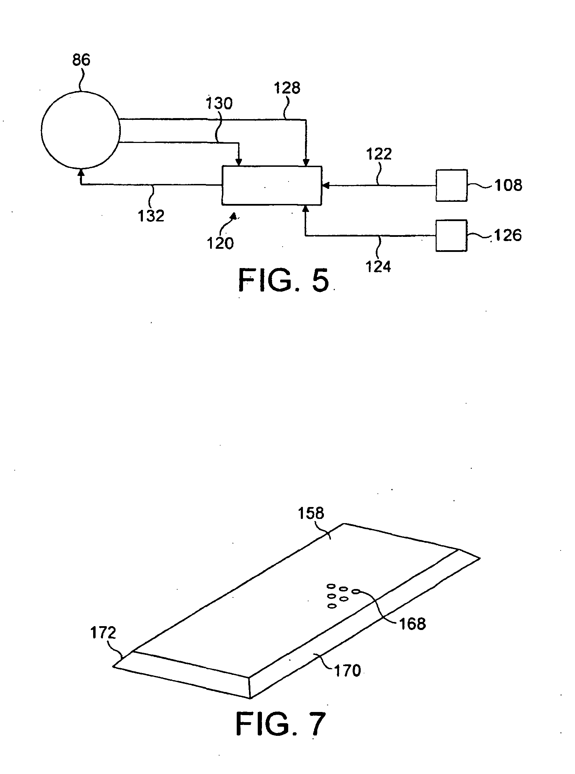

The embossing plate 158 is formed with a Braille formation 168 on its external surface. As shown in Figure 7, the longitudinal edges 170, 172, 170 of the plate are formed as a chamfer such that when engaged with the drum body 150 and clamped by the collar 160 they form a dovetail joint to firmly anchor the plate 158 on the drum body 150. Registration means may be provided on the drum body 150 and the plate 158 such that they are aligned correctly in the circumferential direction.

In manufacturing the embossing plate 158, it may be attached to a suitable support, for example a plastic support and the chamfered edges 170, 172 machined into the plate 158 whilst on that support. This considerably facilitates manufacture of the plate.

In use, therefore, blanks 110 (which are typically of cardboard, paperboard, plastics or other foldable sheet material) will be fed to the unit from an upstream unit where the blanks may have been prefolded to work creases to facilitate subsequent folding and gluing. The blanks are received by the infeed conveyor 4 and fed to the embossing unit 6. The leading edge of each blank will be sensed by the optical sensor 104 and communicated to the control 120. This determines, from the speed of the blank 106 and the rotational position and speed of the embossing drums 70, 72 whether the blanks will engage the embossing formations on the drums in the correct position. If they will not, the control will adjust the rotational speed of the drums to compensate for any estimated error. This happens for each and every blank.

After embossing, the embossed blanks are received by the outfeed conveyor 6 which will feed them to a downstream unit, for example a gluing and folding machine.

Speeds of up to 400m/minute are achievable with the present invention which is a considerable improvement on existing machinery.

The embossing drums 70, 72 may emboss any desired part of the blank 110 by being positioned in the appropriate lateral position in the unit. Thus, for example, the embossing drums 70, 72 may emboss a face panel 112 of the blank 110, or even a glue panel 114 of the blank.

Moreover, more than one pair of embossing drums may be provided across the unit, mounted on further supports similar to those described above and driven by the motors 86, 86a. Thus one or more panels of the blank 110 may be embossed simultaneously.

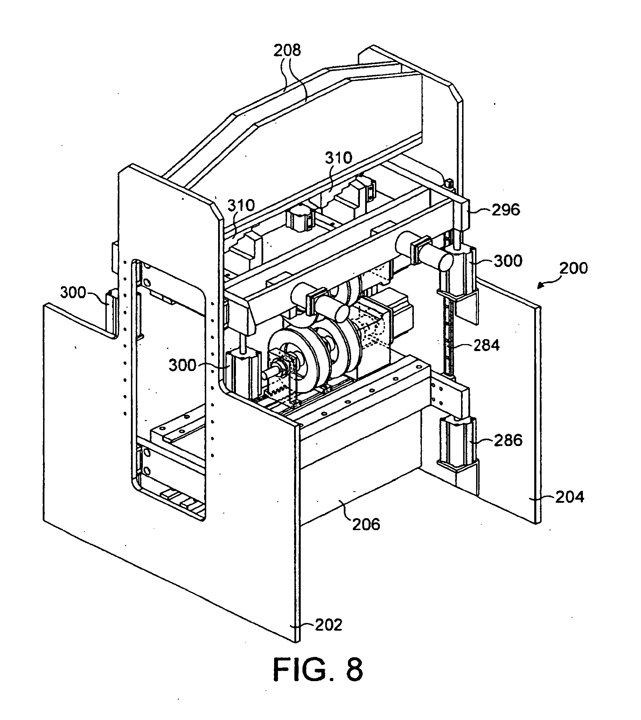

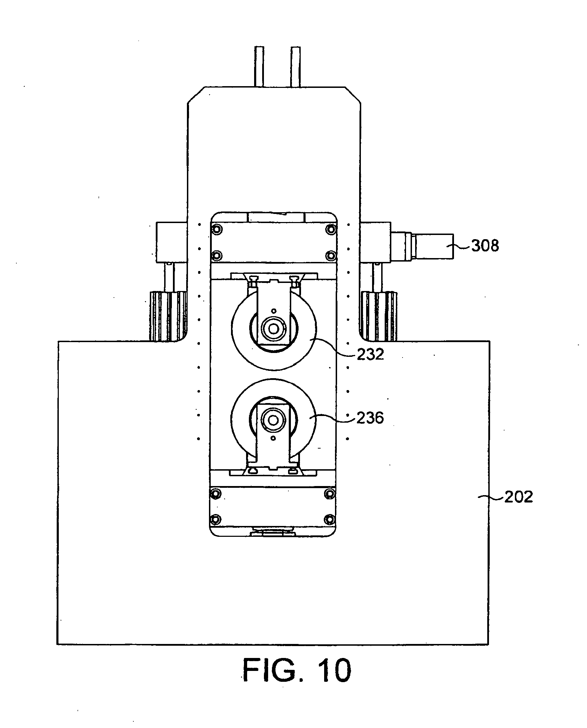

A second embodiment of the invention is now described with reference to Figures 8 to 16.

As in the earlier embodiment, the embossing apparatus is intended to be arranged between upstream and downstream units, not shown. Certain features aspects of the apparatus, for example the sensing and control features are similar to those of the first embodiment and will not, therefore be described, but there are several significant differences, as will become apparent from the description below.

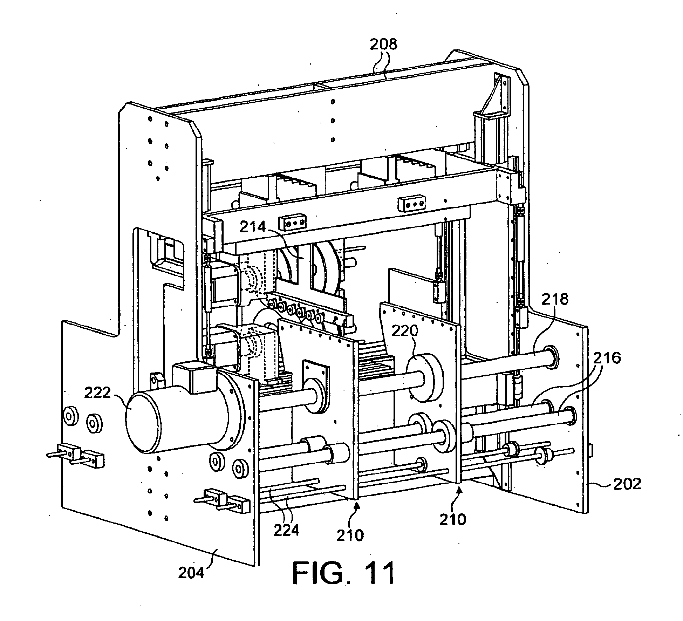

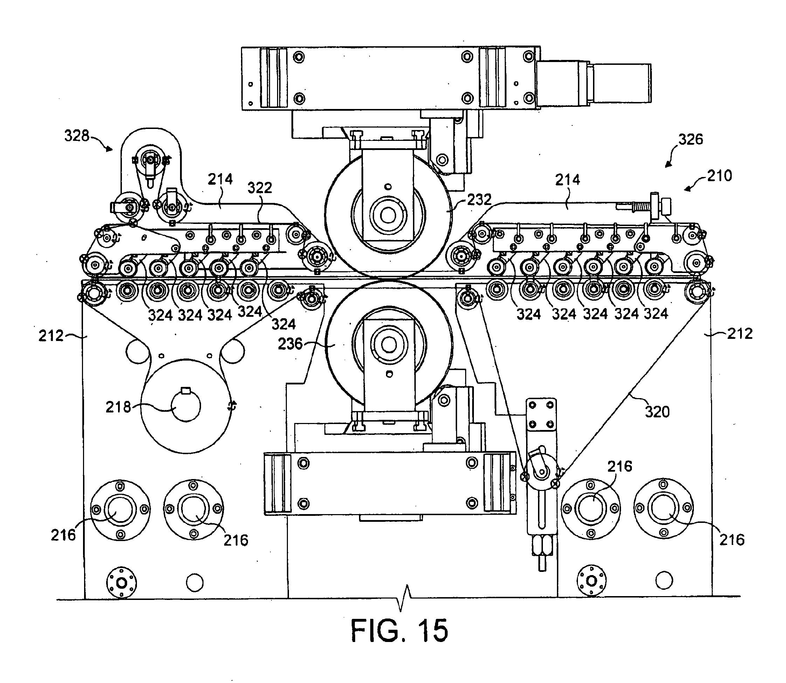

The apparatus 200 comprises side plates 202, 204 which are joined together at top and bottom by respective pairs of bracing plates 206, 208. As shown in Figures 11 and 15, the unit comprises a pair of transversely spaced in feed and outfeed conveyors 210. The conveyors are supported on plates 212, 214, which are joined together by means not shown. The lower plates 212 are mounted for transverse sliding movement on a pair of shafts 216 extending between the side plates 202, 204. A belt drive shaft 218 also extends between the side plates 202, 204 and drives the belts of the conveyors 210 by respective drive wheels 220 arranged on the shaft 218. A drive motor 222 is arranged at one end of the drive shaft 218. This is a different arrangement from the earlier embodiment where drive was effected through a coupling to adjacent machine units.

The lateral position of the conveyor units 210 can be adjusted on the shafts 216 by means of adjustment screws 224. Further details of the conveyor units 210 will be given below.

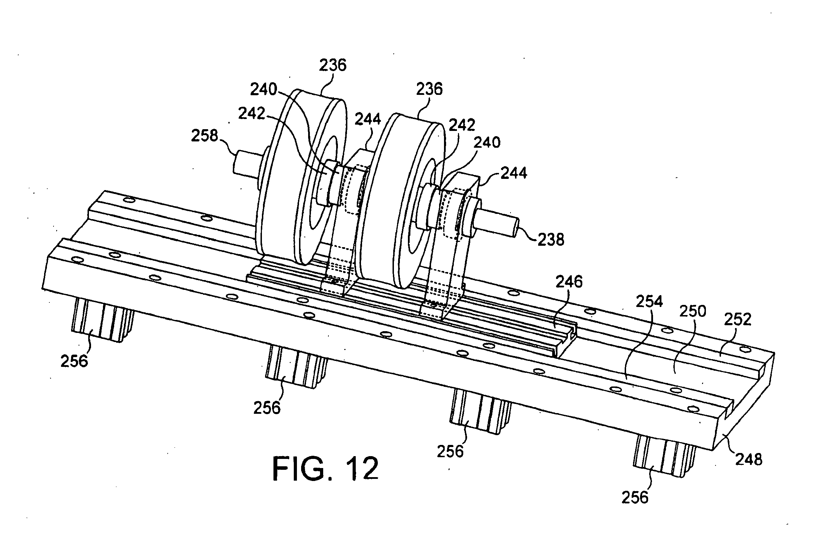

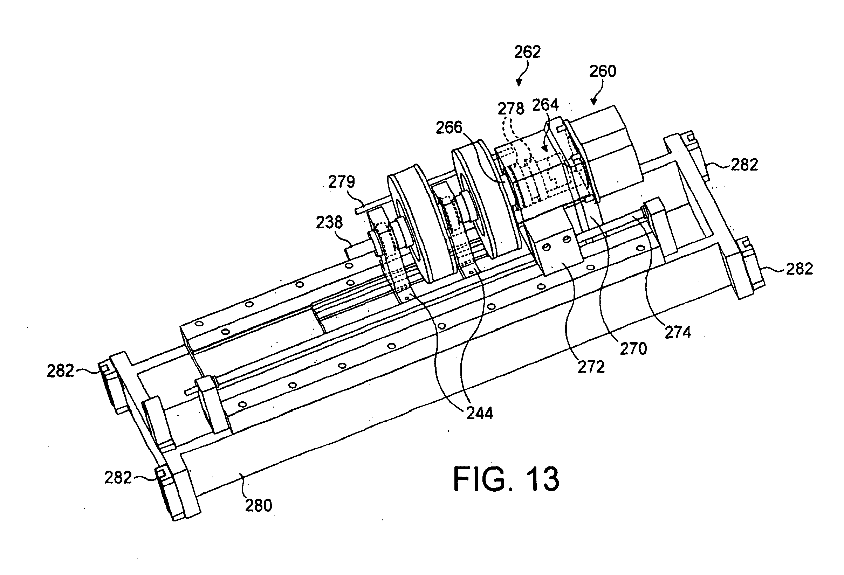

The apparatus 200 further comprises respective pairs of embossing drums 230. The construction of the drums *per se* is generally as described in the earlier embodiment, although they are supported in the apparatus in a different manner. In this regard, an upper pair of male drums 232 is mounted on an upper shaft 234 while a pair of female drums 236 is mounted on a lower shaft 238. Details of the lower drum arrangement are shown in Figures 12 and 13.

With reference to Figure 12, a shaft 238 passes through the drums 236 which can be properly spaced apart on the shaft 238 by means, for example, of one or more spacers 240. Each drum 236 is held in position on the shaft 238 by an ETP clamp 242. Such clamps 242 are well known in the art and may not therefore be described further here. The shaft 238 is supported by bearings in support blocks 244 which are mounted to a carriage 246.

The assembly of shaft 238, drums 236 and carriage 246 is mounted as a unit to a base plate 248. The base plate 248 comprises a dovetail profiled slideway 250 whose edges are defined by rails 252, 254. One rail 252 is fixed relative to the base plate 248 but the other rail 254 is moveable vertically with respect to the base plate 248 by virtue of respective pneumatic cylinders 256 mounted to the underside of the base plate 248.

Turning now to Figure 13, the inboard end 258 of the shaft 238 is coupled to a servo motor 260 by virtue of a coupling 262. The coupling 262 comprises an Oldham coupling 264 and ETP clamp 266 attached to the Oldham coupling 264. The ETP clamp 266 clamps down onto the shaft end 258 and into a bore on the Oldham coupling 264 to secure the two components together. A housing 270 is provided around the coupling 262 and is bolted to the front face of the servo motor 260. The coupling 262 is supported within the housing 270 by a pair of bearings 278. The housing 270 is provided with a dovetail at its lower end for engagement in the slideway 250. A block 272 mounted on a lead screw 274 mounted to the base plate 248 engages the housing 270.

In order to set the correct lateral position of the drums 236, the pneumatic cylinders 256 are extended so as to raise the side guide 254 to allow the carriage 246 , to be mounted to the base plate 248. The shaft 238 can then be joined to the servo motor 260 to form a unitary assembly using the ETP clamp 266. The desired lateral position of the drum/servomotor assembly can be obtained by rotation of the lead screw 274 which moves the block 272 and thereby the drum/servo motor subassembly along the base plate 248. When the subassembly is in the correct position, the cylinders 256 can be retracted so as to clamp down the rail 254 against the carriage 246 thereby securing the carriage 246 in position on the base plate 248.

To set the relative rotational position of the drums 236 and motor 260, an alignment rod 279 can be passed through alignment openings (not shown) in the drums 236 and housing 270.

The base plate 248 is mounted in a support frame 280 which has keyways 282 which engage with runners 284 mounted to the side plates 202, 204 as shown in Figure 8. The vertical position of the frame 280 is adjustable by a mechanism which will be described further below in the context of the upper drum support mechanism. The frame 280 is moveable up and down in the runners by virtue of the pneumatic cylinders 286 mounted to the side plates 202, 204.

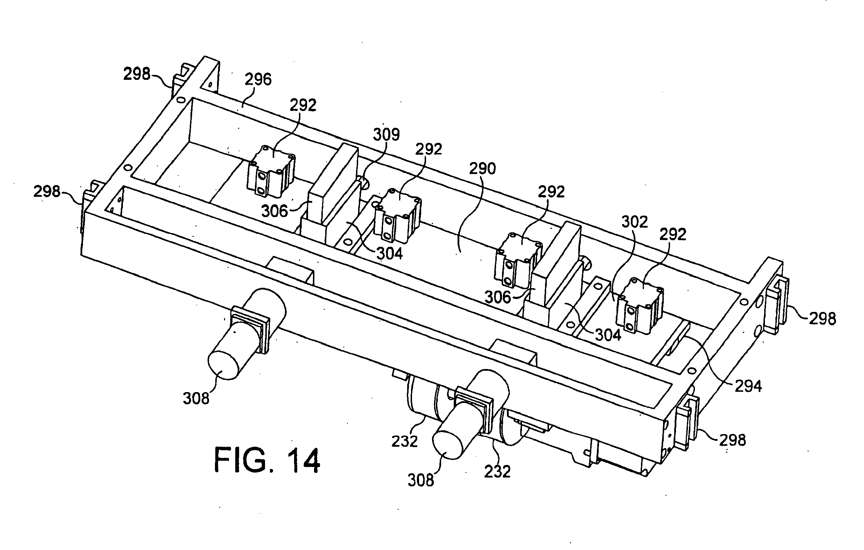

The upper drums 232 are mounted to an upper base plate 290 in a similar manner to that described above. Thus, for example, as shown in Figure 14, the base plate 290 is provided with pneumatic cylinders 292 for raising and lowering the moveable guide 294 of the base plate 290. The upper base plate 290 is mounted to an upper support frame 296, the upper support frame 296 is provided with keyways 298 for engagement with the guides 284. As can be seen in Figure 8, the upper frame 296 is moveable up and down along these guides by virtue of further pneumatic cylinders 300 fixed with respect to the side plates 202, 204.

The upper surface 302 of the upper base plate 290 is provided with respective dovetail slides 304 which each receive a slidable, tapering block 306. The blocks 306 are moveable back and forth along the slides 304 by means of servo motors 308 which drive lead screws 309.

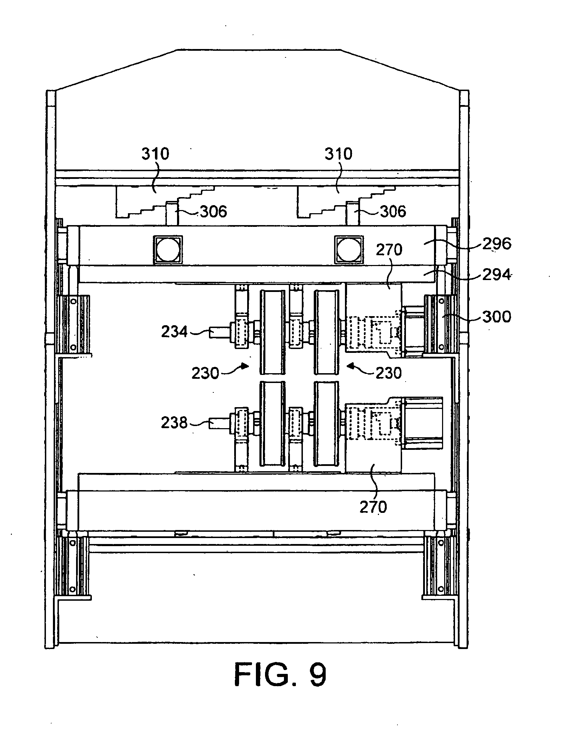

The cross frame members 208 are provided with a pair of stepped wedge members 310 with which the tapered wedges 306 engage in use. This is shown, for example, in Figure 9. The stepped wedge members 310 are moveable from side to side on the cross braces 208 such that different steps on each stepped wedge may align with the respective tapered wedges 306. This allows the vertical position of the upper support frame 296 and thus the upper drums 232 to be varied. This is necessary in order to compensate for different size drums. The tapered wedges 306 are held against the stepped wedges 310 by virtue of the pneumatic cylinders 300.

A similar arrangement is provided on the lower base plate 248 so that the vertical positions of both the upper and lower drums 232, 236 is made possible.

The stepped wedges give a relatively coarse adjustment of the positions of the upper and lower support frames 296, 280. A finer adjustment can be obtained by means of the tapering wedges 306. In particular, by operating the servo motor 308, the tapering wedges 306 can be moved backwards and forwards relative to the stepped wedges 310 thereby allowing a finer adjustment in the vertical position of the upper frame 296. Furthermore, by simultaneously moving the respective tapering wedges 306 to different positions, the upper support frame 296 may be caused to tilt at an angle across the apparatus. This may be useful in adjusting the vertical position of one pair of drums relative to another.

The lower support frame 280 is not provided with a movable tapering wedge mechanism as described above and is maintained perpendicular to the side plates 202, 204 throughout its adjustment through its stepped wedges.

As discussed above, the conveyor mechanism of the present embodiment is different from that of the first embodiment. Rather than having separate upper infeed and outfeed conveyor belts, the present invention has a single upper conveyor 210,

Referring to Figure 15, each conveyor comprises a lower conveyor belt 320 and an upper conveyor belt 322. The lower belt 320 is driven by drive wheel 220 and passes around a series of rollers in a similar manner to the belt 40 of the first embodiment. The upper belt 322 is not driven, other than by frictional engagement with the lower belt 320 or the blanks on the blower belt 320. The upper belt 322 also passes around a plurality of rollers, at least some of which 324 are spring loaded against the lower belt 320. The upper belt 322 has an infeed side 326 and an outfeed side 328

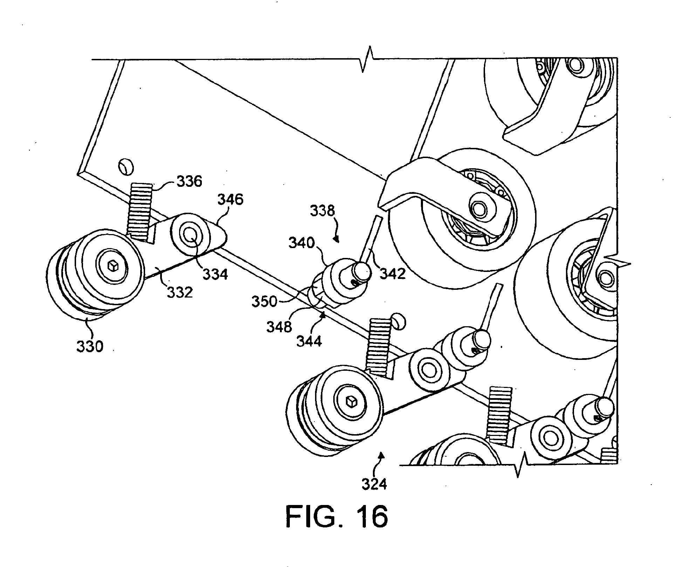

The spring biasing force of the sprung rollers 324 can be adjusted buy a mechanism which is best seen in Figure 16, which shows a detail of a part of Figure 15 with certain components removed for clarity.

Each sprung roller 324 comprises a roller 330 mounted on an arm 332 which is pivotally mounted about an spindle axis 334. The arm 332 and thus the roller 330 are biased downwardly by a spring 336.

An adjustment mechanism 338 comprises a pivotally mounted shaft 340 attached to an adjustment handle 342. The shaft has a cam surface 344 for engagement with a follower surface 346 provided at the upper end of the arm 332. The cam surface 344 has first and second flats 348, 350 provided at outer and inner diameters.

When the outer diameter flat surface portion 348 engages the follower surface 346, the follower surface is pushed down so as to rotate the arm 332 against the force of the spring 336, thereby lifting the roller 330 away from the back of the upper conveyor belt 322. When the inner diameter flat 350 engages the follower surface 346, the roller arm is allowed to rotate down so as to allow the roller 330 to engage the back of the conveyor belt 322.

The effect of this will now be explained in the context of the operation of the apparatus.

In essence the apparatus operates in the same manner as that of the first embodiment. Thus, as blanks are moved through the apparatus on the conveyors 210, the control system adjusts the angular positions of the drums 232, 236 to allow for the accurate embossing of the pattern on the blank approaching the drums 232, 236. Depending on the size of the blank and drums, one or more of the sprung rollers 324 adjacent the drums 232, 236 may be adjusted as described above so as to relieve the spring pressure on the upper conveyor belt 322 and thus allow the blanks to slip relative to the lower conveyor belt 320 as they pass through the drums, thereby allowing a fast throughput of blanks. The precise number of rollers 324 to be adjusted in this manner will depend on the particular blank and drum sizes. It will be understood that even though the upper belt is not biased against the lower belt in the drum region, the presence of the upper belt will stop the blank lifting from the lower conveyor belt 320, which might otherwise occur at high speeds.

Of course modifications may be made to the embodiments described above without departing from the scope of the invention. For example, an alternative form of coupling may be provided between the embossing drums and their servo motor drives.

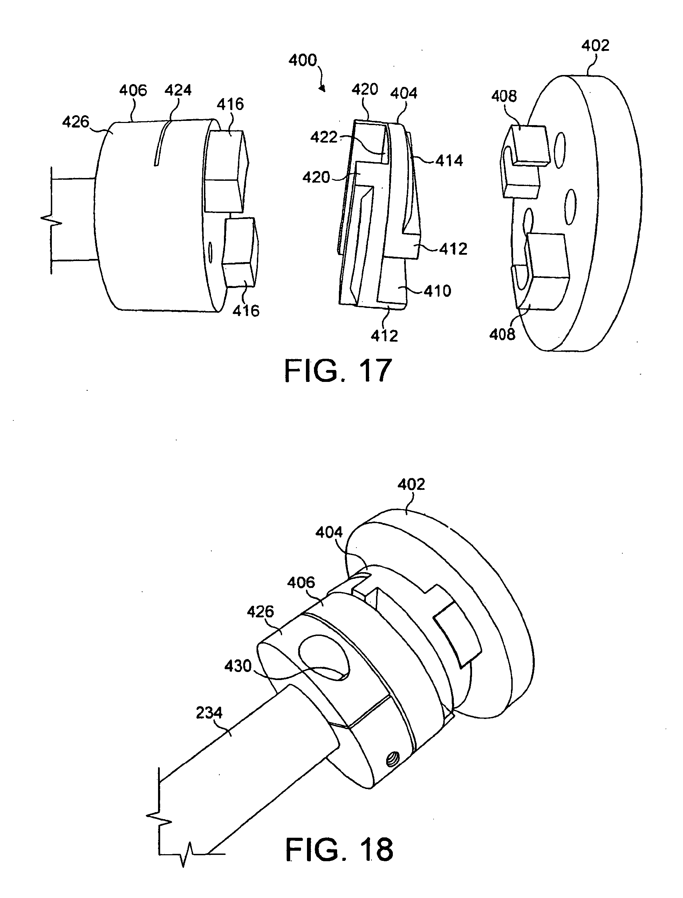

As shown in Figure 17, an alternative coupling 400 comprises a drive plate 402 which is suitably bolted to the servo drive, a plastics coupling member 404 and a flexible coupling member 406 e.g. of steel or other metallic material.. The drive plate 402 comprises a pair of drive teeth 408 which engage in a slot 410 formed between two ribs 412 projecting from a face 414 of the plastics coupling member 404. The flexible coupling member 406 comprises a pair of drive teeth 416 which engage in a slot 418 formed between two ribs 420 projecting from a second face 422 of the plastics coupling member 404. The flexible coupling member 406 further comprises a slot 424 which extends circumferentially for a limited distance, e.g. 180-270°, around the coupling member 406 to impart some flexibility to the coupling member 406. As shown in Figure 18, the part 426 of the coupling member 406 behind the slot 424 is provided with a further slot 428 and clamping means, e.g. a clamping screw 430, for clamping the flexible coupling onto the shaft 234,238.

This coupling allows the embossing drum carriage 246 to be coupled very simply to the servo motor by sliding the carriage 246 into position and then locking it in position.

While intended primarily for embossing packaging, the present invention may have many applications outside that field.

Also, while the embodiments described show two sets of embossing drums, the apparatus may of course operate with just one set of drums.

## Claims

1. An embossing apparatus (2) comprising:
a rotary embossing drum (70,72) driven by a motor (86) and having a Braille embossing formation (168);
a conveyor (4) for feeding blanks (110) to the embossing drum (70,72); and
a control, **characterised in that**:
said control comprises:
means responsive to a sensed position and speed of the blank (110) and a sensed position and speed of the drum (70,72) for applying an correction to the rotational position of the drum (70,72) by adjusting the speed of rotation of the embossing drum (70,72) such that the blank (110) will engage the embossing formation in the correct position as it travels past the formation (168).

2. An embossing apparatus as claimed in claim 1 comprising co-operating male and female embossing drums (70,72) having complementary formations formed on each.

3. An embossing apparatus as claimed in claim 1 or 2 comprising means (108) for sensing the position of the blank (110), for example leading edge of the blank (110).

4. An embossing apparatus as claimed in any preceding claim wherein said means for applying a positional correction comprises a servo motor (86) and a servo control.

5. An embossing apparatus as claimed in claim 4 wherein two cooperating embossing drums (70,72) are driven by respective servo motors.

6. An embossing apparatus as claimed in any preceding claim wherein the control of the apparatus is configured to adjust the rotational position of the embossing formation (168) occurs while a preceding blank (110) is still between the embossing drums (70,72) and the conveyor (4) is positioned or configured such as to permit relative movement between the preceding blanks (110) and the conveyor (4) as the preceding blank pass between the drums (70,72).

7. An embossing apparatus as claimed in any preceding claim comprising infeed and outfeed conveyors (4,6) which comprise a common lower conveyor (40), with separate upper conveyors (52,54) arranged on the infeed and outfeed sides of the embossing unit.

8. An embossing apparatus as claimed in any of claims 1 to 6 comprising common upper and lower infeed and outfeed conveyors (322,320), and wherein a biasing force exerted by the upper infeed conveyor section and possibly also the outfeed conveyor section against the corresponding lower conveyor sections is adjustable, for example wherein the upper conveyor biasing arrangement comprises a plurality of spring loaded wheels (324) acting against the back of the upper conveyor (322), and the adjustment is effected by raising the wheels (324) away from the conveyor (322).

9. An embossing apparatus as claimed in any preceding claim wherein the embossing drum or drums (236) are adjustable transversely of the apparatus, for example wherein the or each embossing drum (236) and its associated drive motor is mounted on a carriage (246) which is adjustable transversely of the apparatus on guides (250) extending across the apparatus.

10. An embossing apparatus as claimed in any preceding claim wherein upper and lower embossing drums (70,72) are mounted in vertically adjustable supports, preferably slidingly mounted in the apparatus.

11. An embossing apparatus as claimed in any preceding claim comprising a plurality of pairs of embossing drums (70,72), wherein the pairs of embossing drums (70,72) are spaced laterally across the apparatus and wherein the pairs of embossing drums (70,72) are arranged on common drive spindles driven by the same motor or motors.

12. A method of embossing Braille on a blank (110) comprising:
feeding a blank (110) to an embossing drum (70,72);
sensing a datum on the blank (110);
determining the speed of the blank (110);
determining the speed and angular position of an embossing formation (168) on the embossing drum;
determining whether said blank (110) will engage with said embossing formation (168) in a desired position; and
in the event that it is determined that the blank (110) will not engage the embossing formation (168) in the desired position, adjusting a rotational position of the drum (70,72) by adjusting the speed of rotation of the embossing drum (70,72) such that it will.

13. A method as claimed in claim 12 comprising calculating the time taken for the sensed blank (110) to reach the embossing formation (168), and using that time, the rotational position of the embossing formation (168) on the drum (70,72) and the speed of rotation of the drum (70,72) determining where on the blank (110), relative to the datum, the formation will engage the blank (70,72).

14. A method of embossing as claimed in claim 12 or 13 wherein the correction of drum position is effected while a preceding blank (110) is still being embossed or is still being held between the embossing drums (70,72).

15. A method of embossing as claim 14 wherein blanks (110) are fed to and/or removed from the embossing drums (70,72) on a conveyor or conveyors (4,6) in such a way that the blanks may slip on the conveyor or conveyors (4,6) to accommodate any difference in surface speed between the conveyors (4,6) and the blank (110) during the adjustment of the drum position.

## Patentansprüche

1. Prägevorrichtung (2) umfassend:
eine Rotationsprägetrommel (70, 72), die durch einen Motor (86) angetrieben ist und eine Brailleschriftprägegestaltung (168) aufweist;
eine Fördereinrichtung (4) zum Zuführen von Rohlingen (110) an die Prägetrommel (70, 72); und
eine Steuerung, **dadurch gekennzeichnet, dass**:
die Steuerung ein Mittel umfasst, das auf eine erkannte Position und Geschwindigkeit des Rohlings (110) und eine erkannte Position und Geschwindigkeit der Trommel (70, 72) reagiert, um eine Korrektur auf die Rotationsposition der Trommel (70, 72) durch Anpassen der Rotationsgeschwindigkeit der Prägetrommel (70, 72) anzuwenden, so dass der Rohling (110) die Prägegestaltung in der richtigen Position kuppelt, während er an der Gestaltung (168) vorbeifährt.

2. Prägevorrichtung gemäß Anspruch 1, die kooperierende männliche und weibliche Prägetrommeln (70, 72) umfasst, auf denen jeweils zueinander komplementäre Gestaltungen gebildet sind.

3. Prägevorrichtung gemäß Anspruch 1 oder 2, umfassend ein Mittel (108) zum Erkennen der Position des Rohlings (110), beispielsweise der Vorderkante des Rohlings (110).

4. Prägevorrichtung gemäß einem der vorhergehenden Ansprüche, bei der das Mittel zum Anwenden einer Positionskorrektur einen Servomotor (86) und eine Servosteuerung umfasst.

5. Prägevorrichtung gemäß Anspruch 4, bei der zwei kooperierende Prägetrommeln (70, 72) durch jeweilige Servomotoren angetrieben sind.

6. Prägevorrichtung gemäß einem der vorhergehenden Ansprüche, bei der die Steuerung der Vorrichtung dafür eingerichtet ist, die Rotationsposition der Prägegestaltung (168) anzupassen, während ein vorhergehender Rohling (110) sich immer noch zwischen den Prägetrommeln (70, 72) befindet, und die Fördereinrichtung (4) derart positioniert oder eingerichtet ist, eine Relativbewegung zwischen den vorhergehenden Rohlingen (110) und der Fördereinrichtung (4) zu erlauben, während der vorhergehende Rohling zwischen den Trommeln (70, 72) hindurchläuft.

7. Prägevorrichtung gemäß einem der vorhergehenden Ansprüche, umfassend Zuführ- und Wegführfördereinrichtungen (4, 6), die eine gemeinsame untere Fördereinrichtung (40) umfassen, wobei separate obere Fördereinrichtungen (52, 54) auf den Zuführ- und Wegführseiten der Prägevorrichtung angeordnet sind.

8. Prägevorrichtung gemäß einem der Ansprüche 1 bis 6, umfassend gemeinsame obere und untere Zuführ- und Wegführfördereinrichtungen (322, 320), wobei eine Vorspannkraft, die durch die obere Zuführfördereinrichtungssektion und möglicherweise auch Wegführfördereinrichtungssektion auf die korrespondierenden unteren Fördereinrichtungssektionen ausgeübt wird, anpassbar ist, beispielsweise, bei der die obere Zuführfördereinrichtungsvorspannanordnung eine Vielzahl von federbelasteten Rädern (324) umfasst, die gegen die Rückseite der der oberen Fördereinrichtung (322) wirken, und das Anpassen durch Anheben der Räder (324) weg von der Fördereinrichtung (322) bewirkt ist.

9. Prägevorrichtung gemäß einem der vorhergehenden Ansprüche, bei der die Prägetrommel oder -trommeln (236) quer zur Vorrichtung anpassbar sind, beispielsweise, bei der die Prägetrommel (236) oder jede der Prägetrommeln (236) und der damit assoziierte Antriebsmotor auf einem Fahrgestell (246) angeordnet sind, das quer zur Vorrichtung auf Führungen (250), die sich über die Vorrichtung erstrecken, anpassbar ist.

10. Prägevorrichtung gemäß einem der vorhergehenden Ansprüche, bei der obere und untere Prägetrommeln (70, 72) in vertikal anpassbaren Lagern befestigt sind, die vorzugsweise gleitend in der Vorrichtung befestigt sind.

11. Prägevorrichtung gemäß einem der vorhergehenden Ansprüche, die eine Vielzahl von Paaren von Prägetrommeln (70, 72) aufweist, wobei die Paare von Prägetrommeln (70, 72) seitlich über die Vorrichtung beabstandet sind, und wobei die Paare von Prägetrommeln (70, 72) auf gemeinsamen Antriebsspindeln angeordnet sind, die durch denselben Motor oder dieselben Motoren angetrieben sind.

12. Verfahren zum Prägen von Brailleschrift auf einen Rohling (110), umfassend:
Zuführen eines Rohlings (110) an eine Prägetrommel (70, 72);
Erkennen eines Festpunkts auf dem Rohling (110);
Ermitteln der Geschwindigkeit des Rohlings (110);
Ermitteln der Geschwindigkeit und der Winkelposition einer Prägegestaltung (168) auf der Prägetrommel;
Ermitteln, ob der Rohling (110) die Prägegestaltung (168) in einer gewünschten Position kuppeln wird; und
in dem Fall, dass ermittelt wird, dass der Rohling (110) mit der Prägegestaltung (168) nicht in der gewünschten Position kuppeln wird, Anpassen einer Rotationsposition der Trommel (70, 72) durch Anpassen der Rotationsgeschwindigkeit der Prägetrommel (70, 72), so dass er es wird.

13. Verfahren gemäß Anspruch 12, dass das Berechnen von Zeit, die der erkannte Rohling (110) zum Erreichen der Prägegestaltung (168) benötigt hat, umfasst, und das Verwenden dieser Zeit, der Rotationsposition der Prägegestaltung (168) auf der Trommel (70, 72) und der Rotationsgeschwindigkeit der Trommel (70, 72) zum Ermitteln, wo auf dem Rohling (110), bezogen auf den Festpunkt, die Gestaltung mit dem Rohling (70, 72) kuppeln wird.

14. Verfahren zum Prägen gemäß Anspruch 12 oder 13, bei dem die Korrektur der Trommelposition bewirkt wird, während ein vorhergehender Rohling (110) immer noch geprägt wird oder immer noch zwischen den Prägetrommeln (70, 72) gehalten wird.

15. Verfahren zum Prägen gemäß Anspruch 14, bei dem Rohlinge (110) zu den Prägetrommeln (70, 72) hin und/oder von ihnen weg auf einer Fördereinrichtung oder auf Fördereinrichtungen (4, 6) derart geführt werden, dass die Rohlinge auf der Fördereinrichtung oder den Fördereinrichtungen (4, 6) gleiten können, um einen Unterschied in der Oberflächengeschwindigkeit zwischen den Fördereinrichtungen (4, 6) und dem Rohling (110) während des Anpassens der Trommelposition auszugleichen.

## Revendications

1. Appareil d'embossage (2) comprenant :
un tambour d'embossage rotatif (70, 72) entraîné par un moteur (86) et ayant une formation d'embossage Braille (168) ;
un convoyeur (4) servant à amener des flans (110) au tambour d'embossage (70, 72) ; et
une commande, **caractérisée en ce que** :
ladite commande comprend :
un moyen sensible à une position et une vitesse détectées du flan (110) et une position et une vitesse détectées du tambour (70, 72) servant à appliquer une correction à la position de rotation du tambour (70, 72) en ajustant la vitesse de rotation du tambour d'embossage (70, 72) de sorte que le flan (110) va mettre en prise la formation d'embossage dans la position correcte à mesure qu'elle se déplace devant la formation (168).

2. Appareil d'embossage selon la revendication 1, comprenant des tambours d'embossage mâle et femelle coopérants (70, 72) sur chacun desquels sont formées des formations complémentaires.

3. Appareil d'embossage selon la revendication 1 ou 2, comprenant un moyen (108) servant à détecter la position du flan (110), par exemple un bord d'attaque du flan (110).

4. Appareil d'embossage selon l'une quelconque des revendications précédentes, dans lequel ledit moyen servant à appliquer une correction de position comprend un servomoteur (86) et une servocommande.

5. Appareil d'embossage selon la revendication 4, dans lequel deux tambours d'embossage coopérants (70, 72) sont entraînés par des servomoteurs respectifs.

6. Appareil d'embossage selon l'une quelconque des revendications précédentes, dans lequel la commande de l'appareil est configurée pour ajuster la position de rotation de la formation d'embossage (168) tandis qu'un flan précédent (110) se trouve encore entre les tambours d'embossage (70, 72) et le convoyeur (4) est positionné ou configuré de façon à permettre un mouvement relatif entre les flans précédents (110) et le convoyeur (4) à mesure que le flan précédent passe entre les tambours (70, 72).

7. Appareil d'embossage selon l'une quelconque des revendications précédentes, comprenant des convoyeurs d'entrée et de sortie (4, 6) qui comprennent un convoyeur inférieur commun (40), avec des convoyeurs supérieurs séparés (52, 54) agencés sur les côtés d'entrée et de sortie de l'unité d'embossage.

8. Appareil d'embossage selon l'une quelconque des revendications 1 à 6, comprenant des convoyeurs d'entrée et de sortie supérieur et inférieur communs (322, 320), et dans lequel une force de sollicitation exercée par la section de convoyeur d'entrée supérieur et éventuellement également la section de convoyeur de sortie contre les sections de convoyeur inférieur correspondantes est ajustable, par exemple dans lequel l'agencement de sollicitation de convoyeur supérieur comprend une pluralité de roues chargées de ressort (324) agissant contre le dos du convoyeur supérieur (322), et l'ajustement se fait en soulevant les roues (324) en éloignement du convoyeur (322).

9. Appareil d'embossage selon l'une quelconque des revendications précédentes, dans lequel le ou les tambours d'embossage (236) sont ajustables transversalement à l'appareil, par exemple dans lequel le ou chaque tambour d'embossage (236) et son moteur d'entraînement associé sont montés sur un chariot (246) qui est ajustable transversalement à l'appareil sur des guides (250) s'étendant à travers l'appareil.

10. Appareil d'embossage selon l'une quelconque des revendications précédentes, dans lequel des tambours d'embossage supérieur et inférieur (70, 72) sont montés dans des supports ajustables verticalement, de préférence montés coulissants dans l'appareil.

11. Appareil d'embossage selon l'une quelconque des revendications précédentes, comprenant une pluralité de paires de tambours d'embossage (70, 72), dans lequel les paires de tambours d'embossage (70, 72) sont espacées latéralement à travers l'appareil et dans lequel les paires de tambours d'embossage (70, 72) sont agencées sur des broches d'entraînement communes entraînées par le même moteur ou les mêmes moteurs.

12. Procédé d'embossage Braille sur un flan (110) comprenant :
l'amenée d'un flan (110) à un tambour d'embossage (70, 72) ;
la détection d'une donnée sur le flan (110) ;
la détermination de la vitesse du flan (110) ;
la détermination de la vitesse et de la position angulaire d'une formation d'embossage (168) sur le tambour d'embossage ;
la détermination permettant de savoir si ledit flan (110) va se mettre en prise avec ladite formation d'embossage (168) dans une position souhaitée ; et
dans le cas où il est déterminé que le flan (110) ne va pas mettre en prise la formation d'embossage (168) dans la position souhaitée, l'ajustement d'une position de rotation du tambour (70, 72) en ajustant la vitesse de rotation du tambour d'embossage (70, 72) de façon à ce qu'il le fasse.

13. Procédé selon la revendication 12, comprenant le calcul du temps nécessaire pour que le flan détecté (110) atteigne la formation d'embossage (168), et en utilisant ce temps, la position de rotation de la formation d'embossage (168) sur le tambour (70, 72) et la vitesse de rotation du tambour (70, 72) déterminant où sur le flan (110), par rapport à la donnée, la formation va mettre en prise le flan (70, 72).

14. Procédé d'embossage selon la revendication 12 ou 13, dans lequel la correction de la position du tambour se fait tandis qu'un flan précédent (110) est encore en cours d'embossage ou se trouve encore maintenu entre les tambours d'embossage (70, 72).

15. Procédé d'embossage tel que la revendication 14, dans lequel des flans (110) sont amenés aux tambours d'embossage (70, 72) ou retirés de ceux-ci sur un ou des convoyeurs (4, 6) de telle manière que les flans puissent glisser sur le convoyeur ou les convoyeurs (4, 6) afin de se conformer à toute différence de vitesse de surface entre les convoyeurs (4, 6) et le flan (110) pendant l'ajustement de la position de tambour.
